(19) Europäisches Patentamt
European Patent Office
Office européen des brevets

(11) **EP 2 101 404 A2**

(12) **EUROPÄISCHE PATENTANMELDUNG**

(43) Veröffentlichungstag:
**16.09.2009 Patentblatt 2009/38**

(51) Int Cl.:
***H02P 21/14*** *(2006.01)*

(21) Anmeldenummer: **09152372.0**

(22) Anmeldetag: **09.02.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**
Benannte Erstreckungsstaaten:
**AL BA RS**

(30) Priorität: **14.03.2008 DE 102008000675**

(71) Anmelder: **ZF Friedrichshafen AG**
**88038 Friedrichshafen (DE)**

(72) Erfinder:
• **Ketteler, Karl-Hermann**
**88677 Markdorf (DE)**
• **Muschel, Allan**
**88045 Friedrichshafen (DE)**
• **Schulmayer, Volker**
**88094 Oberteuringen (DE)**
• **Basiri, Bahram**
**88074 Meckenbeuren (DE)**

(54) **Verfahren zur Ermittlung und Korrektur des von einem Elektromotor abgegebenen Drehmomentes**

(57) Im Rahmen des Verfahrens zur Ermittlung und Korrektur des von einem Elektromotor abgegebenen Drehmomentes wird für den Elektromotor die Gesamtinduktivität ermittelt und die Abweichung zu einer in der Motorsteuerung abgelegten Referenzinduktivität eines Referenzmotors als Funktion des Statorstromes bestimmt, wobei diese Abweichung von den Fertigungs- und Materialtoleranzen abhängt und in direkter Korrelation zum Drehmoment des Elektromotors steht.

Fig.2

**EP 2 101 404 A2**

**Beschreibung**

Die vorliegende Erfindung bezieht sich auf ein Verfahren zur Ermittlung und Korrektur des von einem Elektromotor abgegebenen Drehmomentes gemäß dem Oberbegriff des Patentanspruchs 1.

Elektromotoren unterliegen mechanischen bzw. fertigungstechnischen Toleranzen, die bei gleichen Betriebsparametern in nachteiliger Weise zu unterschiedlichen Werten für das abgegebene Drehmoment führen können. Um dies zu vermeiden kann das von einem Elektromotor abgegebene Drehmoment mittels einer Drehmomentmessnabe ermittelt werden, wobei anschließend die Motoren, bei denen die Toleranzeffekte einen Schwellenwert überschreiten, aussondiert werden. Diese Vorgehensweise resultiert zum einen in einer Erhöhung der Kosten, insbesondere bei einer hohen Ausschussrate.

Zum anderen besteht, auch wenn der Motor nach der Aussondierung bzw. Selektion ein präzises Motormoment aufweist, immer noch die Abhängigkeit des abgegebenen Momentes vom Motorstrom; d. h. dass nur wenn es gelingt, den Motorstrom sehr genau einzuregeln, das vorgegebene Moment abgegeben werden kann. Es ist demnach also möglich, die Exemplarstreuung einzelner Motoren durch eine entsprechend pro Stück angepasste, insbesondere kalibrierte Elektronik auszugleichen. Zu diesem Zweck wird eine Motorsteuerung (ECU) benötigt, welche nach dem Stand der Technik an den jeweiligen Elektromotor angepasst wird, wobei im Rahmen einer Kalibrierung der Stromsensoren der Strom so lange angehoben bzw. gesenkt wird, bis das zuvor festgelegte Drehmoment erreicht wird.

Hierbei entsteht der Nachteil, dass der Motorhersteller eine geeignete Elektronik bei der Motorendprüfung mit überprüfen und kalibrieren muss, was sich auf die Kosten negativ auswirkt. Zudem darf bei dieser Vorgehensweise die Motor-Elektronik-Paarung nicht vertauscht werden; für den Fall eines Defektes muss diese Paarung in nachteiliger Weise als Ganzes ausgetauscht werden.

Der vorliegenden Erfindung liegt die Aufgabe zugrunde, ein Verfahren zur Ermittlung und Korrektur des von einem Elektromotor abgegebenen Drehmomentes anzugeben, durch dessen Durchführung die erwähnten Nachteile der aus dem Stand der Technik bekannten Vorgehensweise vermieden werden. Insbesondere soll das erfindungsgemäße Verfahren es ermöglichen, ohne die Notwendigkeit der Durchführung einer direkten Drehmomentermittlung, beispielsweise mittels eines Drehmomentaufnehmers, Rückschlüsse auf das abgegebene Drehmoment des Elektromotors zu schließen und das Drehmoment zu korrigieren.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird im Rahmen des Verfahrens zur Ermittlung und Korrektur des von einem Elektromotor abgegebenen Drehmomentes vorgeschlagen, für den Elektromotor die Gesamtinduktivität zu ermitteln und die Abweichung zu einer Referenzinduktivität eines Referenzmotors zu bestimmen, wobei diese Abweichung von den Fertigungs- und Materialtoleranzen abhängt und in direkter Korrelation zum Drehmoment des Elektromotors steht.

Die Abweichung der Gesamtinduktivität von der Referenzinduktivität wird in Prozent umgerechnet und im Motorsensor hinterlegt, wo sie von der Motorsteuerung ausgelesen und verarbeitet wird.

Im Rahmen einer Weiterbildung der Erfindung ist vorgesehen, dass die in Prozent umgerechnete Abweichung der Gesamtinduktivität des Elektromotors von der Referenzinduktivität mit einem motortypspezifischen Faktor multipliziert wird; dieser Faktor beträgt beispielsweise 0,5.

Die Erfindung wird im folgenden anhand der beigefügten Figuren beispielhaft näher erläutert. Es zeigen:

Figur 1:     Ein Ersatzschaltbild eines Asynchronmotors, d.h. eine zu einem Asynchronmotor elektrisch äquivalente Schaltung; und

Figur 2:     Ein Diagramm, welches den Zusammenhang zwischen dem Effektivwert des Statorstroms und der Induktivität des Elektromotors bei unterschiedlichen Toleranzwerten veranschaulicht.

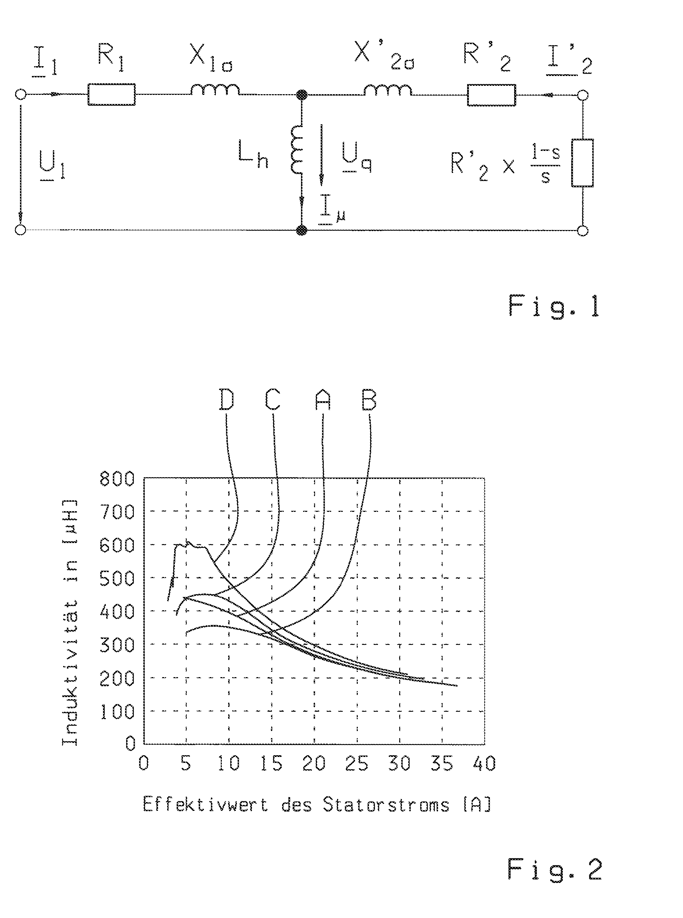

In Figur 1 ist auf der linken Seite des Ersatzschaltbilds die Statorseite des Elektromotors mit einem Widerstand $R_1$ und einer Streuinduktivität $X_{1\sigma}$; auf der rechten Seite ist die Rotorseite dargestellt, umfassend eine Streuinduktivität $X'_{2\sigma}$ und einen Widerstand $R'_2$; der Schlupf ist mit s bezeichnet und die abgegebene mechanische Leistung ist proportional zu der Größe $R'_2 * (1-s) /s$. Des Weiteren ist die Hauptinduktivität mit $L_h$ bezeichnet, wobei I und U die entsprechenden Ströme und Spannungen bezeichnen.

Aus der Fachliteratur ist bekannt, dass das von einem Elektromotor abgegebene Drehmoment T durch folgende Formel gegeben wird:

$$T = \frac{3}{2} \cdot Re(-j \cdot \Psi^* \cdot i_s),$$

wobei $\Psi^*$ und $i_s$ komplexe Größen sind; $\Psi^*$ ist die konjugiert-komplexe Flussverkettung, $i_s$ der komplexe Strom. Demnach hängt das innere Motormoment T ausschließlich vom magnetischen Fluss und vom Strom ab.

Im Fall einer Asynchronmaschine ist die Flussverkettung das Produkt aus Rotorstrom und Hauptinduktivität, so dass für das Motormoment T gilt:

$$T = \frac{3}{2} \cdot L_h \cdot Re(-j \cdot i_s^* \cdot i_r),$$

mit $L_h$ = Hauptinduktivität (Gesamtinduktivität) und $i_r$ = Rotorstrom.

Gemäß der Erfindung werden mittels einer Leerlaufmessung (der Elektromotor dreht frei ohne Last) die Leerlaufspannung, der Leerlaufstrom, der Wicklungswiderstand und die Phasenlage von Spannung und Strom zueinander erfasst. Hierbei kann die Phasenlage beispielsweise mittels einer Poweranalyse oder einer Softwareauswertung, die aus den erfassten Messgrößen (Leerlaufspannung und Leerlaufstrom) die Phasenlage errechnet, ermittelt werden.

Nach einer Korrektur des Leerlaufstromes über die Phasenlage lässt sich die Gesamtinduktivität des Elektromotors wie folgt bestimmen.

Die Gesamtreaktanz Z ergibt sich aus

$$Z = \frac{U_1}{I_1} \quad \text{wobei} \quad Z = \sqrt{R_1^2 + X_1^2} \quad \text{bzw. } Z^2 = R_1^2$$

$+ (\omega L_h + \omega X_{1\sigma})^2$, mit w = Speisekreisfrequenz.

Aus der berechneten Gesamtreaktanz Z ergibt sich folgendes für die Gesamtinduktivität ($L_h + X_{1\sigma}$):

$$L_h + X_{1\sigma} = \frac{\sqrt{Z^2 - R_1^2}}{2\Pi f},$$

mit f= Speisefrequenz.

Da derartige Elektromotoren, beispielsweise Asynchronmotoren, über FOR (Feldorientierte Regelung) angesprochen werden, ist es zwingend erforderlich, die genaue Induktivität des zu regelnden Elektromotors zu kennen. Diese wird einmal exemplarisch an einem Referenzmotor beispielsweise anhand der oben angegebenen Formel und durch Messung entsprechender Größen erfasst und in der FOR bzw. Motorsteuerung als Referenzinduktivität hinterlegt.

Gemäß der Erfindung wird für einen Elektromotor die Gesamtinduktivität ermittelt und die Abweichung zur Referenzinduktivität bei einem vorgegebenen Statorstromwert bestimmt, wobei diese Abweichung von den Fertigungs- und Materialtoleranzen abhängt und in direkter Korrelation zum Drehmoment des Elektromotors steht, wie bereits erläutert. Dabei wird davon ausgegangen, dass die Streuinduktivität $X_{1\sigma}$ klein ist gegenüber der Hauptinduktivität und eine Fertigungsstreuung der Streuinduktivität von sekundärer Größenordnung ist.

In Figur 2 ist ein Diagramm dargestellt, welches den Zusammenhang zwischen dem Effektivwert des Statorstroms und der Induktivität bei unterschiedlichen Toleranzwerten veranschaulicht. Kurve A stellt hierbei die Referenzinduktivität dar, wobei Kurven B, C und D die ermittelten Induktivitäten von drei weiteren Elektromotoren darstellen.

Die Abweichung der Gesamtinduktivität eines Elektromotors von der Referenzinduktivität bei einem vorgegebenen Statorstromwert wird in Prozent umgerechnet und vorzugsweise in dem vorhandenen Motorsensor hinterlegt, wo sie von der Motorsteuerung ausgelesen und verarbeitet wird.

So wird beispielsweise bei einer bestimmten Abweichung bei einem bestimmten Stromwert das abgegebene Drehmoment durch einen Vergleich mit dem entsprechenden Drehmoment des Referenzmotors bei dem bestimmten Stromwert ermittelt; beispielsweise ist bei einer Abweichung der Gesamtinduktivität des Elektromotors von der Referenzinduktivität von +10% das abgegebene Moment um 10% höher, als das vom Referenzmotor bei dem bestimmtem Stromwert abgegebene Moment.

Bei einer negativen Abweichung wird die in Prozent umgerechnete Abweichung der Gesamtinduktivität des Elektromotors von der Referenzinduktivität zur Ermittlung des Drehmomentes vorzeichenbehaftet verwendet; in diesem Fall wird das Drehmoment aus dem Drehmoment des Referenzmotors reduziert um die in Prozent umgerechnete Abweichung berechnet.

Gemäß der Erfindung kann in der Steuerung der Stromwert derart eingestellt werden, dass das gewünschte Drehmoment unter Berücksichtigung der Abweichung der Gesamtinduktivität des Elektromotors von der Referenzinduktivität abgegeben werden kann. Beispielsweise wird unter Berücksichtigung der Erkenntnis, dass bei einem bestimmten Stromwert das abgegebene Moment dem Moment des Referenzmotors erhöht bzw. reduziert um die in Prozent umgerechnete Abweichung der Gesamtinduktivität des Elektromotors von der Referenzinduktivität entspricht der Stromwert eingestellt, der zu dem gewünschten Moment führt.

In Abhängigkeit von dem Elektromotortyp kann die in Prozent umgerechnete Abweichung mit einem motortypspezifischen Faktor multipliziert werden, der empirisch bestimmt werden kann.

Durch die erfindungsgemäße Konzeption können die Fertigungs- und Materialtoleranzen eines Elektromotors schnell und auf einfache Weise ermittelt werden. In vorteilhafter Weise sind keine Messeinrichtungen, beispielsweise Drehmomentaufnehmer für das Drehmoment notwendig, was in einer signifikanten Kostenreduzierung resultiert.

Zudem entsteht der Vorteil, dass die Ausschusskosten sehr gering gehalten werden können, da weite Streuungen eines Elektromotors durch Berücksichtigung der Abweichung der Induktivität von der Referenzinduktivität ausgeglichen werden können.

Bezugzeichen

| | |
|---|---|
| T | Motormoment |
| $L_h$ | Hauptinduktivität |
| Z | Gesamtreaktanz |
| $R_1$ | Widerstand des Stators |
| $X_{1\sigma}$ | Streuinduktivität des Stators |
| $R'_2$ | Widerstand des Rotors |
| $X'_{2\sigma}$ | Streuinduktivität des Rotors |
| s | Schlupf |
| A | Referenzinduktivität als Funktion des Effektivwertes des Statorstroms |
| B | Gesamtinduktivität eines ersten Elektromotors als Funktion des Effektiv- wertes des Statorstroms |
| C | Gesamtinduktivität eines weiteren Elektromotors als Funktion des Effek- tivwertes des Statorstroms |
| D | Gesamtinduktivität eines weiteren Elektromotors als Funktion des Effek- tivwertes des Statorstroms |

**Patentansprüche**

1. Verfahren zur Ermittlung und Korrektur des von einem Elektromotor abgegebenen Drehmomentes, **dadurch gekennzeichnet, dass** für den Elektromotor die Gesamtinduktivität ermittelt und die Abweichung zu einer in der Motorsteuerung abgelegten Referenzinduktivität eines Referenzmotors als Funktion des Statorstromes bestimmt wird, wobei diese Abweichung von den Fertigungs- und Materialtoleranzen abhängt und in direkter Korrelation zum Drehmoment des Elektromotors steht.

2. Verfahren nach Anspruch 1, **dadurch gekennzeichnet, dass** die Abweichung der Gesamtinduktivität des Elektromotors von der Referenzinduktivität bei einem vorgegebenen Statorstromwert in Prozent umgerechnet und in dem vorhandenen Motorsensor hinterlegt wird, wo sie von der Motorsteuerung ausgelesen und verarbeitet wird.

3. Verfahren nach Anspruch 2, **dadurch gekennzeichnet, dass** die in Prozent umgerechnete Abweichung der Gesamtinduktivität des Elektromotors von der Referenzinduktivität mit einem motortypspezifischen Faktor multipliziert wird.

4. Verfahren nach Anspruch 2 oder 3, **dadurch gekennzeichnet, dass** bei einer bestimmten Abweichung bei einem bestimmten Stromwert das vom Elektromotor abgegebene Drehmoment durch einen Vergleich mit dem entsprechenden Drehmoment des Referenzmotors bei dem bestimmten Stromwert ermittelt wird, wobei zu diesem Zweck das Drehmoment des Referenzmotors um die in Prozent umgerechnete Abweichung der Gesamtinduktivität des Elektromotors von der Referenzinduktivität, ggf. mit einem motortypspezifischen Faktor multipliziert, erhöht bzw. reduziert wird.

5. Verfahren nach Anspruch 4, **dadurch gekennzeichnet, dass** in der Steuerung der Stromwert derart eingestellt wird, dass das gewünschte Drehmoment unter Berücksichtigung der Abweichung der Gesamtinduktivität des Elektromotors von der Referenzinduktivität, die ggf. mit einem motortypspezifischen Faktor multipliziert wird, abgegeben werden kann.

$\underline{I}_1$  $R_1$  $X_{1\sigma}$  $X'_{2\sigma}$  $R'_2$  $\underline{I}'_2$

$\underline{U}_1$  $L_h$  $\underline{U}_q$  $R'_2 \times \dfrac{1-s}{s}$

$\underline{I}_\mu$

Fig. 1

D  C  A  B

Induktivität in [µH]

800
700
600
500
400
300
200
100
0

0   5   10   15   20   25   30   35   40

Effektivwert des Statorstroms [A]

Fig. 2